# EUROPEAN PATENT APPLICATION

(11) **EP 4 664 446 A1**
(43) Date of publication of application: **17.12.2025**
(21) Application number: 24182454.9
(22) Date of filing: 16.06.2024
(51) Int. Cl.: G10H 1/00, G06N 20/00

(54) **METHOD AND SYSTEM FOR AI-BASED AUDIO LOOP CONSTRUCTION**

(71) Applicant: Bellevue Investments GmbH & Co. KGaA, 10589 Berlin (DE)
(72) Inventor: Jaron, Jürgen, 10589 Berlin (DE); Rein, Dieter, 10589 Berlin (DE)

(57) **Abstract**

According to an embodiment, there is presented herein a system and method for automatic Al- based audio loop construction based on parameter selection of a user. It benefits from a combination of the analysis of an extensive and structured audio loop database and the training and utilization of machine learning in an Al-based audio loop creation engine for the creation of audio loops according to the wishes of the user.

## Description

### CROSS REFERENCE TO RELATED APPLICATIONS

This application claims the benefit of U.S. Provisional Patent Application serial number 64/521,360 filed on June 16th, 2023, and incorporates said provisional application by reference into this document as if fully set out at this point.

### TECHNICAL FIELD

This disclosure relates generally to methods of generating audio content and, in more particular, to methods utilizing machine learning in an artificial intelligence-based ("AI") selection engine for automatic audio loop construction.

### BACKGROUND

Creation of a musical work has been a goal and dream of many people for as long as music has been around. However, a lack of knowledge of details regarding the intricacies of musical styles has prevented many from writing or generating music. As such, this endeavor has, for a very long time, been the purview of individuals having the necessary knowledge and education.

With the advent of the personal computer and other computerized devices (e.g., tablet computers) and the widespread adoption of these devices in the home consumer market, software products emerged that allowed a user to create original music without the need-to-know music theory or needing to understand the terminology of music constructs such as measures, bars, harmonies, time signatures, key signatures, etc. These software products feature graphical user interfaces that provide users with a visual approach to song and music content creation that allowed the novice user easy access to the tools useful in music generation and enabled the users to focus on the creative process without being hampered by having to learn the intricacies of music generation.

In addition to increasing the accessibility of music generation, the content that is available and usable in the process of generating music has also been adapted to correspond to the directive of supplying an easy-to-use music generation approach. These sorts of programs typically provide a number of individual sound clips of compatible length, e.g., audio loops or just "loops", which can be selected and inserted into the multiple tracks of an on-screen graphical user interface as parts of the process of music creation. With these sorts of software products, the task of music or song generation has come within reach of an expanded audience of users, who happily take advantage of the more simplified approach to music or song generation as compared with note-by-note composition. These software products have evolved over the years, gotten more sophisticated and more specialized and some have even been implemented on mobile devices.

The general approach to music or song generation provided by these software products has remained virtually unchanged, even though the processing power of the computing devices has increased and the types of devices that run this software has expanded on par with the changes in device distribution. That is, the conventional approach to music creation which has remained largely unchanged involves requiring the user to select individual pre-generated audio loops that represent different instruments (e.g., drums, bass, guitar, synthesizer, vocals, etc.), and manually arrange these loops in digital tracks to generate individual song parts, typically with a length of 4 or 8 measures, the goal being the generation of a full audio clip or song. Using this approach most users are able to generate one or two of these song parts with the help of the graphical user interface of a mobile or desktop-based software product according to their own taste and are therefore potentially able to generate individual verses and maybe the refrain of their own song.

To generate a plurality of available and selectable audio loops is a huge undertaking wherein professionals in audio creation have to generate large quantities of high-quality audio content that features a wide variety of individual instruments, genres, etc., and all that content or individual loops will preferably have a limited time length to allow for its use in such an above-described digital audio generation program.

Thus what is needed is a system and method that allows the generation process of digital audio loops to be automatized, wherein a machine learning AI-based system is utilized for the automatic generation and provision of audio loops consistent with a user's desires for later utilization by the user.

Heretofore, as is well known in the media editing industry, there has been a need for an invention to address and solve the above-described problems. Accordingly, it should now be recognized, as was recognized by the present inventors, that there exists, and has existed for some time, a very real need for a system and method that would address and solve the above- described problems.

Before proceeding to a description of the present invention, however, it should be noted and remembered that the description of the invention which follows, together with accompanying drawings, should not be construed as limiting the invention to the examples (or embodiment) shown and described. This is so because those skilled in the art to which the invention pertains will be able to devise other forms of this invention within the ambit of the appended claims.

### SUMMARY OF THE INVENTION

According to an embodiment, there is provided a system and method for hybrid AI-based audio loop generation In one embodiment an approach is provided that utilizes machine learning processes in connection with an AI- engine. The AI engine is directed to generate audio loops consistent with the user's musical goal and wishes.

It should be clear that an approach such as this would be a tremendous aid to the user and would additionally assist in the development and the creation of professional music pieces / songs, where the user is provided with the building blocks necessary to generate a music, and where the user is able to define the musical features of the audio loops as they are needed. Therefore, this approach delivers functionality and opportunities to the user of music creation programs which enables a user to easily begin, continue and complete the music generation process. Additionally, due to the fact that the creation, provision and selection of available and potentially usable audio loops is based on machine learning, the user is instantly and quickly provided with a result list containing generated audio loops according to the selection of the generation options for the integration into a particular section or part of a desired output work. Therefore, the prior art approach that limits the user by providing only a predefined collection of selectable audio loops will benefit extraordinarily from an approach that allows the user to control the generation process of a music work starting with the user directed generation of the initial building blocks of the music work generation - the audio loops.

In some embodiments, the following general steps will be followed in a typical workflow. The user will be required to initiate the audio loop generation process, this preferably by providing at least one parameter to the system. One of these parameters might be instrument, genre, bpm, or a word prompt. The values associated with the provided parameters will be communicated to the system. Word prompts will be parsed by the system and words associated with the available system parameters will be identified. As a next step the instant invention will then utilize the selected and trained AI model, wherein utilization means that the system will provide the parameters to the AI model, which in a next step will iteratively generate a plurality of audio loops for review and selection by the user.

The foregoing has outlined in broad terms some of the more important features of the invention disclosed herein so that the detailed description that follows may be more clearly understood, and so that the contribution of the instant inventors to the art may be better appreciated. The instant invention is not limited in its application to the details of the construction and to the arrangements of the components set forth in the following description or illustrated in the drawings. Rather, the invention is capable of other embodiments and of being practiced and carried out in various other ways not specifically enumerated herein. Finally, it should be understood that the phraseology and terminology employed herein are for the purpose of description and should not be regarded as limiting, unless the specification specifically so limits the invention. Further objects, features and advantages of the present invention will be apparent upon examining the accompanying drawings and upon reading the following description of the preferred embodiments.

### BRIEF DESCRIPTION OF THE DRAWINGS

These and further aspects of the invention are described in detail in the following examples and accompanying drawings.
Fig. **1** is an illustration of a working environment of the instant invention according to an embodiment.
Fig. **2** depicts a high-level schema of the functionality of the machine learning AI utilized in the instant invention according to one embodiment.
Fig. **3** shows an overview of some of the key stages in the AI system process.
Fig. **4** depicts some of the stages of the AI system according to an embodiment of the instant invention.
Fig. **5** illustrates one possible data arrangement of the audio loop according to the instant invention.
Fig. **6** shows the some preferred steps of the instant invention that might be utilized when preparing the audio loop database for utilization by the instant invention.
Fig. **7** illustrates some possible AI models selectable for use in the instant invention.
Fig. **8** illustrates some of the steps that might be necessary before the training phase of the instant invention.
Fig. **9** illustrates a preferred workflow suitable for use with the instant invention.

### DETAILED DESCRIPTION

While this invention is susceptible of embodiment in many different forms, there is show in the drawings, and will herein be described hereinafter in detail, some specific embodiments of the instant invention. It should be understood, however, that the present disclosure is to be considered an exemplification of the principles of the invention and is not intended to limit the invention to the specific embodiments or algorithms so described.

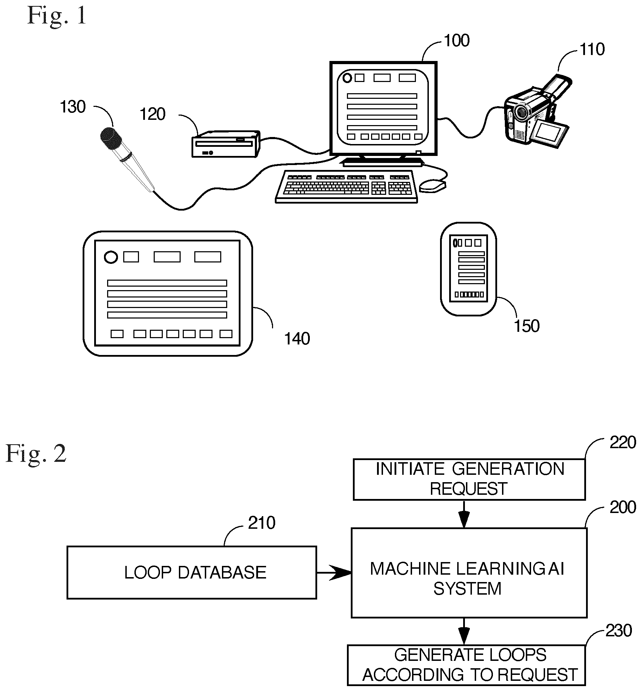

As is generally indicated in Figure **1****,** at least a portion of the instant invention will be implemented in form of software running on a user's computer **100** or another device with a CPU such a table computer, smart phone, etc. For purposes of the instant disclosure, the word "computer" or CPU will be used generically to refer to any programmable device such as those listed in the previous sentence. Such a computer will have some amount of program memory and storage (whether internal or accessible via a network) as is conventionally utilized by such units. Additionally, it is possible that an external camera **110** of some sort be utilized with - and will preferably be connectible to the computer so that video and/or graphic information can be transferred to and from the computer (Figure **1****).** Preferably the camera **110** will be a digital video camera, although that is not a requirement, as it is contemplated that the user might wish to utilize still images from a digital still camera in the creation of his or her multimedia work. Further given the modern trend toward incorporation of cameras into other electronic components (e.g. in handheld computers, telephones, laptops, etc.) those of ordinary skill in the art will recognize that the camera might be integrated into the computer or some other electronic device and, thus, might not be a traditional single-purposes video or still camera. Although the camera will preferably be digital in nature, any sort of camera might be used, provided that the proper interfacing between it and the computer is utilized. Additionally, a microphone **130** might be utilized so that the user can add voice-over narration to a multimedia work. A digital media storage device **120** such as a DVD burner, external hard drive, SSD drive, etc., could be useful for storing in-progress or completed works. Of course, the storage device **120** might be accessible via a network or be situated in the cloud. Further, it might also be possible and is shown in Fig. 1 that the process of the instant invention might be implemented or accessed on portable tablet computer devices **140** or on mobile devices, such as smart phones **150.**

Turning next to Figure **2****,** this figure contains an high-level schematic that illustrates one aspect of the functionality of the machine learning AI system **200.** The training for the system for machine-based learning is preferably repeated or updated each time new loops are added to or removed from the audio loops database **210.** This loops contained in the database of audio loops might be a filtered or curated collection, meaning all or only part of the loops were professional created or selected. Repeated training means that as the audio loop database content changes over time with new content being added to the database or content being removed from it, the AI will be invoked to evaluate these changes. Thus, the AI has knowledge of every audio loop in the database and various parameters associated with that loop, its frequency characteristics, its auditory properties, length, tempo, dynamics, key, etc.

The user initiates a generation request and communicates it to the machine learning AI **220.** In some variations, the generation request comprises a desired genre, instrument, bpm, word prompt, etc. For example, if the user indicates that a "fast" loop is to be produced, the parsing system will associate "fast" with the parameter BPM and pick a suitable BPM. Similarly, if the user indicates that the produced loops should be "slow jazz", the parsing system will associate those words with the BPM parameter and the genre parameter and select appropriate associated parameter values and both parameter values with be used subsequently. Those of ordinary skill in the art will recognize how more complex prompts might be parsed to obtain one or more parameters associable with database loop parameters. Or, in other instances, the user can initiate the request by selecting an audio loop and asking the AI system to generate more audio loops similar to the selected one. Either way, the trained AI will then generate one or more audio loops according to the user request **230.**

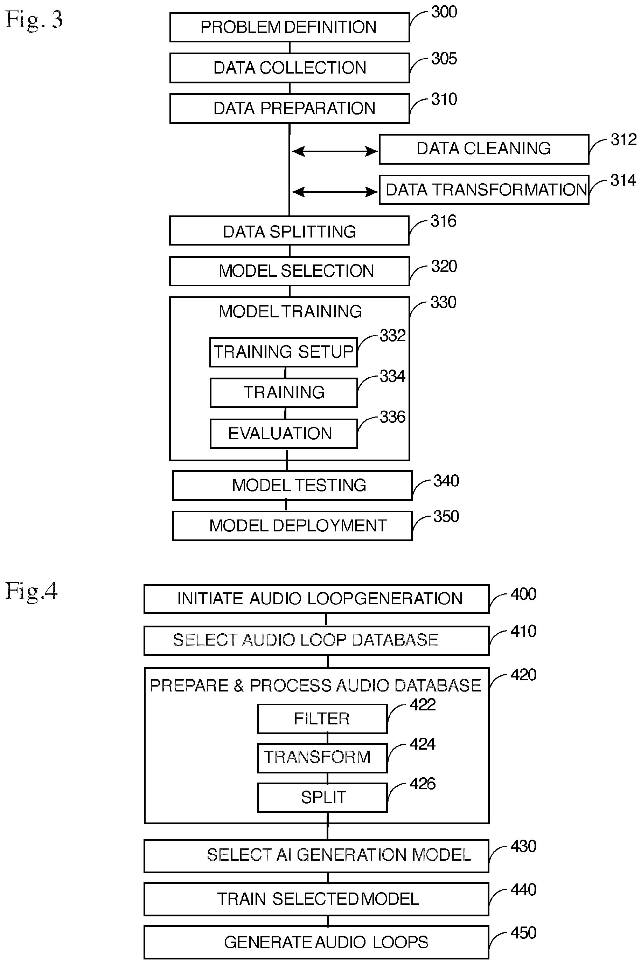

Turning next to Figure **3****,** this figure shows an overview of some key stages in one variation of the AI system process. The AI process involves teaching a machine learning model to recognize and make predictions or decisions based on data. In a first step, the problem that is to be solved with the implementation of an AI system **300** is defined. In a next preferred step, the necessary data relevant to the problem has to be collected **305,** which in a further step has to be prepared **310** for further utilization. Depending on the embodiment, the preparation might include data cleaning **312,** which means that missing values are handled, errors are correct and irrelevant information for the problem or the problem solution are removed. In a next preferred step of data preparation, the data will potentially need to be transformed into a suitable format **314.** This might involve converting the format of the loop to a standard format (e.g., converting the loop to MP3), normalizing or standardizing the numerical values in the loop and calculating or otherwise determining other features about the loop that could help the training and learning functionality of the AI model.

As a next preferred step the newly added data will preferably be assigned into one of a training set, a validation set or a test set. Typically, 70-80% of the data in the input database is used for training, 10-15% for validation and the remaining percent for purposes of testing the AI system. Obviously, the initial assignment of a loop to a set might be changed at a later date. In addition, there might be instances where a loop might be assigned to more than one set, e.g., it might be assigned to both the training set and the test set. Finally, although it is preferred that all of the sets be contained in a single database it is obvious that the sets could be stored in separate files. In a next preferred step, an AI model will need to be selected **320** that fits the defined problem and also can accommodate its architecture. For example, the number of layers in the loop, the type of layers, etc., will need to be defined and this is especially true with complex models involving neural networks. As a further key step, the AI model has to be trained **330.** Training will typically comprise of the indicated general steps. First, an initial training setup **332** will be performed, which might include defining a loss function that is to be used to measure how well the model's predictions match the actual data. Initial values for hyperparameters generally connected to the training of AI systems will also need to be defined, like learning rate, batch size and number of epochs.

In a next preferred step, the training data will be passed through the selected model and the model parameters in a recurring training process **334,** defined during the training setup, which will be adjusted using the loss values determined by the defined loss function. As a last step of the training process, the model is evaluated **336** by utilizing the validation data set after each run through of the training phase, i.e., a so called "epoch" (i.e., training the neural network with all of the available training data for one cycle), to monitor the performance of the AI system and tune and refine the hyperparameters. It should be noted that the three steps comprising the model training - training setup, training and evaluation are steps that are not executed only once, but are designed to be recurring to refine the quality of the AI model which may be being curated and adapted by an expert.

In a further preferred step the model is tested **340** with the defined settings and data setup on the determined test data set to assess its generalization ability to data that is not currently being provided to the AI system. As a preferred last step of the key stages of the AI system training process the trained model and its parameters are saved and used as a solution **350** to the defined problem.

Coming next to Figure **4****,** this figure illustrates some preferred stages of the AI system according to an embodiment. In a first preferred step, the problem definition is determined and defined to be audio loop generation **400.** This information will be provided to the AI system according to the instant invention. In a next preferred step an audio database / data source is selected **410.** This selection can comprise the selection of the entire audio loop database or a just a subset of the available audio loop database **410.** The audio loop database has preferably at least these main properties - these audio loops have been pre generated by expert musicians and separated into at least 12 different instrument classes, these being, for example, drums, bass, synth, keys, fx, guitar, strings, percussion, vocals, tonal percussion, samples, brass woodwind According to one approach, each loop in the loop database will be analyzed by an algorithm which could result as many as 200 of fundamental/low level auditory properties of an audio loop including, for example, its volume, loudness, the frequency content of the loop or sound (preferably based on its fast Fourier transform and/or its frequency spectrum) etc. However, to ease the computational load associated with building the parameters associated with the each music item, the dimensionality of the auditory properties for each loop will optionally and preferably be reduced to fewer summary parameters. In one preferred embodiment a further computation (e.g., principal component analysis ("PCA"), linear discriminant analysis ("LDA"), etc.) will be performed on the fundamental/low parameters to reduce their dimensionality. Methods of reducing dimensionality using PCA and LDA in a way to maximize the amount of information captured are well known to those of ordinary skill in the art. The resulting summary parameters which, in some embodiments might comprise at least eight or so parameters, will be used going forward. For purposes of the instant disclosure, the discussion will go forward assuming that the summary parameter count is "8", although those of ordinary skill in the art will recognize that fewer or greater parameters might be used depending on the situation.

Continuing with the present example, using these 8 or so parameter values the instant invention can generate an 8-dimensional mapping of the characteristics of each audio loop, with musically similar loops being positioned in the vicinity of each other in 8D space. This information might be stored in a separate database file and utilized by the machine learning AI as part of the process of an embodiment of the instant invention. Additionally, an energy number might be extracted for each audio loop, wherein this energy number might be selected to represent an energy level of an audio loop, e.g., the musical dynamic of the audio loop, wherein for example "1" stands for high energy, "2" for medium energy and "3" for low energy. These energy numbers are associated with each audio loops depending on the analysis of its audio content, with, for example, rapidly changing audio content being sorted into the "high energy" category. Furthermore, these audio loops are also identified as bellowing to different categories, for example in mix-packs and also some mix-packs are grouped into a genre.

In a next preferred step the selected data of the audio database may need to be prepared and processed **420** for further utilization by the instant invention. In a first preferred processing steps the audio loop database is filtered **422,** wherein audio loops with lower quality are removed from the audio loop database. This filtering step might be a mixture of a curated automatic system and the utilization of the data from the analysis step. Note that, for purposes of the instant disclosure, a curated system means that one or more experts have determined if an audio loop sounds "good." If more than one expert is involved, preferably 3 or more will be utilized, the majority vote decides if the audio loop in question is to be kept in the database or removed. In addition to a human curating step the instant invention also utilizes the parameter data associated with the audio loop and determines the location of an associated audio loop in an 8 dimensional mapping of all analyzed audio loops t.. If an audio loop is too far from others in the same genre, it may be removed from the database or it may be flagged for a cross check by the determination of the expert opinion. In the next preferred step, the data in the audio loop database is transformed according to the processing requirements of the selected AI model **424.** As a further step of the instant invention the audio loop database is preferably split into three different data sets **426** as discussed previously, i.e., it is split into training data set, a validation data set and a test data set. Preferably the training data set comprises about 75% of the loops, the validation data set comprises about 15% and test data is typically the loops not assigned to either set which would typically comprise about 10% of the audio loops.

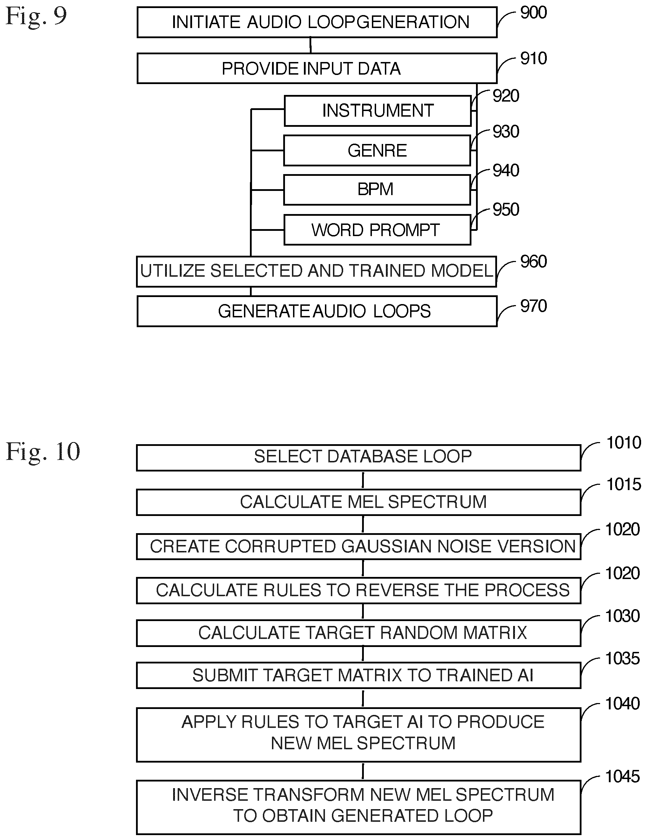

As a next preferred step the generation model has to be selected, preferably by an expert user for implementation of the AI system **430.** The generation model might be selected from a group comprising of GAN networks (i.e., a generative adversarial network), diffusion networks and transformer, wherein in the instant invention the utilization of the diffusion network is preferred. In a next preferred step the selected model will be repeatedly / iteratively trained **440** using the training and validation data sets and tested against the test data set until the quality of the output of the selected AI system corresponds to the quality requirements of an expert or until the accuracy passes as measured by a defined loss function. In a next preferred and last step the defined AI system will then generate audio loops **450.** It should be noted that these stages are preferably initiated frequently to elevate the quality of the AI model and that these stages and, typically, information and parameters relating to the training and testing of the AI will not be accessed or modified by the user. The end-user, the user who will generate audio loops without having to know or understand the details of defining or selection an AI model, will be presented with a simplified approach that is disclosed in connection with Figure **9****,** of this instant disclosure.

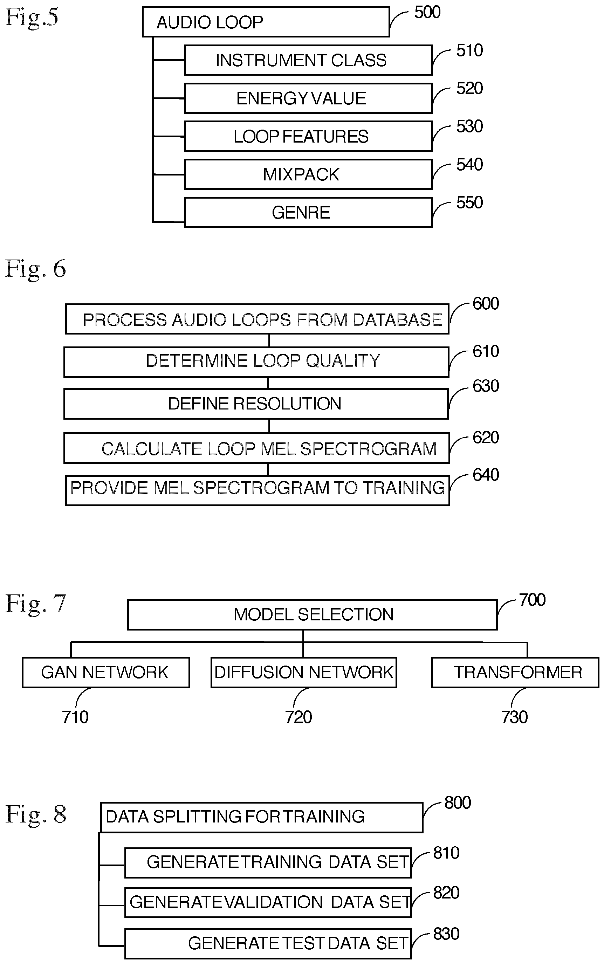

Turning next to Figure **5****,** this figure illustrates one preferred collection of parameters which will be available for each audio. An audio loop **500** is the smallest component of audio generation utilized by the instant invention and comprises repeating musical content of a specific length. The audio loop will be associated with at least one of a plurality of at least 12 instrument classes **510,** for example, drums, bass, synth, keys, fx, guitar, strings, percussion, vocals, tonal percussion, samples, brass woodwind. Additionally, an energy value **520** is associated with each audio loop. The energy value represents in a general way the energy level of the audio loop, where energy level is related to the musical dynamic flow of the audio loop. Additionally, the audio features associated with each loop **530** may comprises a very large number of digital values and that will especially be the case if time-varying frequency information from the standard or mel spectrum (see below) are computed and stored. In this example, audio loops of the same instrument class are grouped together as a mix-pack **540** and mix-packs are also then associated with genres **550,** for example Hip-Hop, Retro and Jazz, etc.

Coming next to Figure **6****,** this figure shows some steps that might be used when preparing an audio loop in the database for utilization by an embodiment. After selection of the diffusion network the audio loop database has to be processed **600** to create the data that is used during model training. In this context a mel spectrogram will preferably be calculated for each audio loop in preparation for use by the AI in training. Those of ordinary skill in the art will recognize that a mel spectrogram is a variation of the traditional spectrogram that is commonly used in speech processing and machine learning tasks. It is similar to a spectrogram in that it shows the frequency content of an audio signal over time, but using a different frequency axis and possibly different amplitude scaling (e.g., the spectral values might be changed to decibel-based amplitudes). In a standard spectrogram, the frequency axis is linear and is measured in hertz (Hz). However, the human auditory system is more sensitive to changes in lower frequencies than higher frequencies, and this sensitivity decreases logarithmically as frequency increases. The mel scale is a perceptual scale that approximates the non-linear frequency response of the human ear. The generated mel spectrograms have different resolutions and the higher the resolution, the less audio information will be lost. Each audio file then will provide a mel spectrogram of, for example, 64x64 or 256x256 resolution **630.** To calculate a mel spectrogram, the STFT (short-time Fourier Transform) is obtained as usual by dividing the audio into short, preferably overlapping, segments in order to obtain a sequence of time-varying frequency spectra. Then, each spectrum is sent through a set of filters, the so-called mel filter bank, to transform the frequencies to the mel scale. The mel spectrograms for each loop are then stored where they can be accessed and used in connection with the training step and validation steps **640.**

Coming next to Figure **7****,** this figure illustrates some of the different AI models **700** that might be selectable for use in the instant invention. Applicable models might be GAN Network **710.** As noted previously, GAN stands for "generative adversarial network." A GAN Network is a class of machine learning frameworks and a prominent framework for approaching generative AI. Given a training set, this technique learns to generate new data with the same statistics as the training set. The core idea of a GAN is based on the "indirect" training through the discriminator, another neural network that can tell how "realistic" the input seems, which itself is also being updated dynamically. Diffusion networks **720** are advanced machine learning algorithms that uniquely generate high-quality data by progressively adding noise to a dataset and then learning to reverse this process. This innovative approach enables them to create remarkably accurate and detailed outputs, from lifelike images to coherent text sequences. Central to their function is the concept of gradually degrading data quality, only to reconstruct it to its original form or transform it into something new. This technique enhances the fidelity of generated data and offers new possibilities in areas like medical imaging, autonomous vehicles, and personalized AI assistants. Transformers **730** are models that are neural networks that learn context and thus meaning by tracking relationships in sequential data like the words in a sentence. Transformer models apply an evolving set of mathematical techniques, called attention or self-attention, to detect subtle ways even distant data elements in a series influence and depend on each other.

Coming next to Figure **8****,** this figure illustrates some preferred steps that might be initiated before the training phase of the instant invention. The provided audio loop database will be split for provision to the training process **800** as was described previously in connection with Fig. **3****.** The selected model can be trained using the complete audio loop database, or a specific instrument class and even more specifically a particular instrument class within a certain genre. The system preferably generates a training data set **810,** a validation data set **820,** and a test data set **830,** with the preferred distribution discussed previously, i.e., a training data set comprising about 75% of the loop database and validation and test data sets, comprising about 15% and 10%, respectively.

Turning next to Figure **9****,** this figure illustrates a preferred workflow suitable for use with an embodiment. In a first preferred step the user will initiate the audio loop generation **900** process. This will preferably involve the user providing input selections **910** that will define the character of the output. For example, the input data might comprise of one or more of the following input variable types: instrument **920,** genre **930,** bpm **940** and word prompt **950.** The provided input data is then relayed to the selected and trained model **960,** which in a preferred embodiment is a diffusion model.

The training process has, as has been disclosed, preferably been implemented prior to the utilization of the AI system by the end-user and the trained system is then able to interpret and implement the user input and generates audio loops with utilizing random noise as starting process and then providing generated audio loops for the user **970.**

Turning next to Fig. **10****,** this figure illustrates in greater detail an operational logic suitable for use with a diffusion AI model approach. Diffusion models, in the context of generating music, refer to a class of generative models that generate image files by successively adding noise (preferably Gaussian noise) to each pixel of an image until the image is converted to pure noise. At each step of the process, the noise that is added is randomly generated using the previous pixel value as its mean, with the variance of the noise being chosen according to a predetermined schedule. Noise is successively added to each pixel in the original image in this manner until the image has been converted to a matrix of digital pure Gaussian noise values with no trace of the starting image remaining. This will be referred to as the "corrupted" image below.

Then, during the learning process the AI is tasked with taking the corrupted image and attempting to reconstruct the original image under the assumptions that created it, i.e., the corrupted image was created by successively adding random noise to each pixel in the original image under the probabilistic assumptions described above. The variance schedule might be estimated from the data or provided to the AI. The reverse operation will result in a set of rules that represent the mathematical steps necessary to change the corrupted image back into original image.

Once the AI has calculated the rule set, the AI is considered to be trained on that image and the steps that were used to recover the original from the corrupted image can be applied to any other matrix of numbers.

Finally, in order to generate a new image a 2D matrix with the same dimensions as the original image is filled with randomly generated values. Then the AI is given that matrix and is asked to apply the same steps that produced the starting image from its end product to the new random matrix. That will result in a new image the same dimensions as the original that is different from it.

The application to music generation is as follows. The mel spectrum for any loop in the database **1010** can be calculated and displayed as a 2-D image **1015.** Then, as before, during the training phase the mel spectrum of a loop is successively corrupted by adding random noise to it until it is corrupted matrix of random values **1020.** As before, the AI is taught by finding steps that reverse the corruption process assuming the probabilistic model utilized in the forward phase of the training to obtain a set of rules **1025.** Then, new random target matrices can be created **1030** and submitted to the AI **1035** where the rule set calculated previously can be applied to produce the mel spectrum of a new loop **1040.** Finally, the mel spectrum from the random starter matrix is inverse transformed **1045** to form a music loop that has been AI generated. It should be clear that additional target / random matrices could be generated, each of which would produce a different generated loop.

Note that the mel spectrograms of the loops could be calculated to various resolutions, i.e., number of overlapping windows. The higher the resolution, the less audio information will be lost. In view of the computational effort required, the mel spectrogram of each loop in the database will preferably be limited to 64x64 or 256x256 resolution, although other resolutions are certainly possible and, as computer technology advances, will likely be preferred in the future.

Some training approaches utilize of different resolutions of the mel spectrograms and, additionally, differences in the training iterations. For example, training the network from scratch might utilize with a batch size of 16 and an epoch number of 100, where batch size is the number of samples that are fed into a model at each iteration of the training process. This determines how often the model parameters are updated based on the gradient of the loss function. A larger batch size means more data per update, but also more memory and computation requirements. Epoch refers to the number of entire passing of training data through the algorithm.

Finally, in still another preferred embodiment a GAN network might be selected as the desired model for loop generation, wherein the GAN network also utilizes a trained and validated system wherein the above-mentioned feature numbers generated for every audio loop are utilized for the provision of output material according to the input of the user. The GAN network according to this embodiment is trained with all the determined 8 numbers for the 8 features of each audio loop in the audio loop database, therefore the system can translate the user request for audio loop generation in at least 8 distinct numbers that are then provided to a generator network that utilizes these numbers to generate audio content that reproduces at least an audio loop whose analysis results would produce exactly the translated 8 distinct numbers from the user request.

### CONCLUSIONS

Of course, many modifications and extensions could be made to the instant invention by those of ordinary skill in the art. For example, in one preferred embodiment an experienced user might be provided with an elaborate graphical user interface allowing the user to define specific parameter regarding the loop creation. So, for example a graphical user interface might be provided that allows the user to define the length of the desired loop, a specific value determining the variance of the audio loop - meaning defining how diversified the audio loop should be and how much the audio loop is allowed to differ from the originally entered parameters and parameter values.

Additionally it might be possible for the user to control the style selection - defining which styles are usable by the AI for the audio loop creation and which are off limits - with a strict limitation option as well as a variable option, wherein the strict limitation defines desired and non-desired styles and the variable limitation is depending on the variance setting.

It should be noted and understood that the invention is described herein with a certain degree of particularity. However, the invention is not limited to the embodiment(s) set for herein for purposes of exemplifications, but is limited only by the scope of the attached claims.

It is to be understood that the terms "including", "comprising", "consisting" and grammatical variants thereof do not preclude the addition of one or more components, features, steps, or integers or groups thereof and that the terms are to be construed as specifying components, features, steps or integers.

The singular shall include the plural and vice versa unless the context in which the term appears indicates otherwise.

If the specification or claims refer to "an additional" element, that does not preclude there being more than one of the additional elements.

It is to be understood that where the claims or specification refer to "a" or "an" element, such reference is not to be construed that there is only one of that element.

It is to be understood that where the specification states that a component, feature, structure, or characteristic "may", "might", "can" or "could" be included, that particular component, feature, structure, or characteristic is not required to be included.

Where applicable, although state diagrams, flow diagrams or both may be used to describe embodiments, the invention is not limited to those diagrams or to the corresponding descriptions. For example, flow need not move through each illustrated box or state, or in exactly the same order as illustrated and described.

Methods of the present invention may be implemented by performing or completing manually, automatically, or a combination thereof, selected steps or tasks.

The term "method" may refer to manners, means, techniques and procedures for accomplishing a given task including, but not limited to, those manners, means, techniques and procedures either known to, or readily developed from known manners, means, techniques and procedures by practitioners of the art to which the invention belongs.

For purposes of the instant disclosure, the term "at least" followed by a number is used herein to denote the start of a range beginning with that number (which may be a ranger having an upper limit or no upper limit, depending on the variable being defined). For example, "at least 1" means 1 or more than 1. The term "at most" followed by a number is used herein to denote the end of a range ending with that number (which may be a range having 1 or 0 as its lower limit, or a range having no lower limit, depending upon the variable being defined). For example, "at most 4" means 4 or less than 4, and "at most 40%" means 40% or less than 40%. Terms of approximation (e.g., "about", "substantially", "approximately", etc.) should be interpreted according to their ordinary and customary meanings as used in the associated art unless indicated otherwise. Absent a specific definition and absent ordinary and customary usage in the associated art, such terms should be interpreted to be ± 10% of the base value.

When, in this document, a range is given as "(a first number) to (a second number)" or "(a first number) - (a second number)", this means a range whose lower limit is the first number and whose upper limit is the second number. For example, 25 to 100 should be interpreted to mean a range whose lower limit is 25 and whose upper limit is 100. Additionally, it should be noted that where a range is given, every possible subrange or interval within that range is also specifically intended unless the context indicates to the contrary. For example, if the specification indicates a range of 25 to 100 such range is also intended to include subranges such as 26 -100, 27-100, etc., 25-99, 25-98, etc., as well as any other possible combination of lower and upper values within the stated range, e.g., 33-47, 60-97, 41-45, 28-96, etc. Note that integer range values have been used in this paragraph for purposes of illustration only and decimal and fractional values (e.g., 46.7 - 91.3) should also be understood to be intended as possible subrange endpoints unless specifically excluded.

It should be noted that where reference is made herein to a method comprising two or more defined steps, the defined steps can be carried out in any order or simultaneously (except where context excludes that possibility), and the method can also include one or more other steps which are carried out before any of the defined steps, between two of the defined steps, or after all of the defined steps (except where context excludes that possibility).

Further, it should be noted that terms of approximation (e.g., "about", "substantially", "approximately", etc.) are to be interpreted according to their ordinary and customary meanings as used in the associated art unless indicated otherwise herein. Absent a specific definition within this disclosure, and absent ordinary and customary usage in the associated art, such terms should be interpreted to be plus or minus 10% of the base value.

Still further, additional aspects of the instant invention may be found in one or more appendices attached hereto and/or filed herewith, the disclosures of which are incorporated herein by reference as if fully set out at this point.

Thus, the present invention is well adapted to carry out the objects and attain the ends and advantages mentioned above as well as those inherent therein. While the inventive device has been described and illustrated herein by reference to certain preferred embodiments in relation to the drawings attached thereto, various changes and further modifications, apart from those shown or suggested herein, may be made therein by those of ordinary skill in the art, without departing from the spirit of the inventive concept the scope of which is to be determined by the following claims.

## Claims

1. A method of AI engine-based audio loop generation, wherein is provided a loop database containing a plurality of audio loops, each of said loops having a plurality of loop parameters associated therewith, said plurality of loop parameters comprising least an instrument, a genre, a BPM, and a plurality of other parameters, comprising the steps of:
(a) selecting an AI model;
(b) training said selected AI model using said database, thereby obtaining a trained AI model;
(c) obtaining from a user at least one AI prompt, said AI prompt comprising at least one of a genre, a BPM, an instrument, or a word prompt associable with at least one of said loop parameters;
(d) submitting said at least one AI prompt to said trained AI model;
(e) using said trained AI model and said at least one AI prompt to obtain a generated audio loop; and
(f) performing said generated audio loop for the user.

2. The method according to claim 1, wherein said plurality of loop parameters associated with each loop includes a mel spectrum for each loop in said database.

3. The method according to claim 1, wherein step (b) comprises the steps of:
(b1) selecting a loss function,
(b2) partitioning said database into three sets, a training set, a validation set, and a test set,
(b3) using said training set and said selected AI model to obtain an initially trained AI model,
(b4) testing said initially trained AI model against said validation data set,
(b5) using said loss function to calculate a performance value for said test of said initially trained AI model against said validation data set,
(b6) if said performance value indicates that said initially trained AI model is not acceptable, repeating steps (b3) through (b5) with said initially trained AI model replacing said selected AI model until said performance value indicates that said initially trained AI mode, thereby obtaining a said trained AI model.

4. A method of diffusion AI based audio loop generation, wherein is provided a database containing a plurality of loops, each of said loops having a plurality of loop parameters associated therewith, said plurality of loop parameters comprising least an instrument, a genre, a BPM, and a mel spectrum, comprising the steps of:
(a) obtaining from a user at least one AI prompt, said AI prompt comprising at least one of a genre, a BPM, an instrument or a word prompt associable with at least one of said loop parameters;
(b) selecting from said database a loop having said AI prompt associated therewith;
(c) obtaining said mel spectrum associated with said selected database loop;
(d) using diffusion AI to obtain an AI rule set associated with said mel spectrum;
(e) generating a target matrix of random values;
(g) applying said AI rule set to said target matrix, thereby obtaining a target mel spectrum;
(h) inverse transforming said target mel spectrum to a time domain, thereby obtaining a generated audio loop; and
(i) performing at least a portion of said generated audio loop for the user.

5. The method according to claim 4, wherein said mel spectrum comprises an original 2D array of digital values and wherein step (d) comprises the steps of:
(d1) adding a series of random values to each digital value in said original 2D array of digital values,
(d2) performing step (d1) until said 2D array of digital values comprises a 2D corrupted matrix,
(d3) using said 2D corrupted matrix and said 2D original array of digital values to produce said rule set, said rule set said for probabilistically transforming said 2D corrupted matrix into said 2D original array of digital values.

6. A method of diffusion AI based audio loop generation, wherein is provided a database containing a plurality of loops, each of said loops having a plurality of loop parameters associated therewith, said plurality of loop parameters comprising least an instrument, a genre, a BPM, and an AI rule set, comprising the steps of:
(a) obtaining from a user at least one AI prompt, said AI prompt comprising at least one of a genre, a BPM, an instrument or a word prompt associable with at least one of said loop parameters;
(b) selecting from said database a loop having said AI prompt associated therewith;
(c) accessing said AI rule set associated with said selected database loop;
(d) generating a target matrix of random values;
(e) applying said AI rule set to said target matrix, thereby obtaining a target mel spectrum;
(f) inverse transforming said target mel spectrum to a time domain, thereby obtaining a generated audio loop; and
(g) performing at least a portion of said generated audio loop for the user.
